# EUROPEAN PATENT SPECIFICATION

(11) **EP 3 660 770 B1**
(45) Date of publication and mention of the grant of the patent: **04.11.2026**
(21) Application number: 18209593.5
(22) Date of filing: 30.11.2018
(51) Int. Cl.: G06Q 20/38, G06Q 10/08

(54) **METHODS AND SYSTEMS FOR SECURE PRODUCT TRACKING DATA STORAGE AND VERIFICATION**
VERFAHREN UND SYSTEME ZUR SICHEREN PRODUKTNACHVERFOLGUNGSDATENSPEICHERUNG UND -VERIFIZIERUNG
PROCÉDÉS ET SYSTÈMES DE STOCKAGE ET DE VÉRIFICATION SÉCURISES DE DONNÉES DE SUIVI DE PRODUIT

(43) Date of publication of application: 03.06.2020
(73) Proprietor: Mastercard International Incorporated, Purchase, New York 10577 (US)
(72) Inventor: COLLINS, Robert, Dublin A94 Y9K1 (IE); ELDER, Stephen, Co.Dublin (IE); FLEMING, David James, Wicklow A94 Y9K1 (IE)
(74) Representative: Gill Jennings & Every LLP

(56) References cited:
- WO-A1-01/99063
- WO-A1-2006/055846
- WO-A1-2017/187395
- WO-A1-2017/195160
- CN-A- 108 269 351
- GB-A- 2 473 485
- US-A1- 2005 131 826
- US-A1- 2006 149 671
- US-A1- 2018 189 463
- US-B1- 8 688 524
- US-B2- 7 657 740
- AFRICAN ET AL: "The basics of identification and barcoding for traceability GS1 AIDC Standards in Healthcare", BREAKOUT PANEL II @, 1 January 2018 (2018-01-01), pages 15 - 1545, XP055810301, Retrieved from the Internet <URL:https://www.gs1.org/sites/default/files/docs/addisababa/PresentationDay2/20180501_Addis_Day%202_Panel%202__The%20Basics%20of%20Identification%20and%20Barcoding%20for%20Traceability%20_FINAL.pdf> [retrieved on 20210603]
- ANONYMOUS: "Distributed hash table - Wikipedia, the free encyclopedia", 9 June 2015 (2015-06-09), XP055308352, Retrieved from the Internet <URL:https://web.archive.org/web/20150609172655/https://en.wikipedia.org/wiki/Distributed_hash_table> [retrieved on 20161006]

## Description

### FIELD

The present disclosure relates to secure and verifiable storage and retrieval of data, in particular in the context of product tracking.

More specifically, aspects relate to a computer-implemented verifiable data storage method, a computer-implemented verification method, a computer-implemented data storage and verification method, a computer program product comprising computer-readable instructions which, when executed by one or more processors, cause the method of the preceding aspects to be performed and a computer system configured to perform the method of the first to third aspects.

### BACKGROUND

While there are now widespread standards for electronic payment, verification of purchase often still requires retention and presentation of a paper receipt, which can be easily lost or destroyed. Where product tracking data is already stored electronically, this is generally not done in a consistent way.

Systems for storing data relating to purchase, return and repair of products are diverse and inconsistently applied and implemented. They also usually rely on the robustness and security of a single computer system, allowing data to be lost or stolen. This can be a particular problem where the data includes purchase history data which consumers may wish kept private, such as pharmaceutical purchases.

Access to such data may have to be restricted, so that it may not be possible for other merchant branches in the same merchant chain as the branch in which a product was purchased to verify the purchase in order to handle a return. Similarly, authorised repair agents may not be able to directly verify purchases.

The data access arrangements to implement collection of products purchased through one merchant from a third party collection point may be complex. Manufacturers may also not be able to track their products all the way down the supply chain, and may have to require the end user of a product to take additional steps such as completing and sending forms to the manufacturer to register a warrantee. Regulatory authorities and police may not have access to individual product tracking data which could be useful to them, for example to ensure proper return and disposal of unused pharmaceuticals and to tackle black market trading.

What is needed is a way of storing product tracking data in a secure, verifiable way, while permitting easy access by authorised parties where required.

WO 2006/055846 A1 describes software for detecting duplicate commercial paper transactions by identifying a check identification code, such as a Magnetic Ink Character Recognition (MICR) code, from a commerical paper transaction, with the check identification code comprising a plurality of fields. The software determines a hash value based on at least a portion of the plurality of fields and verifies the authenticity of the MICR code based, at least in part, on the determined hash value.

US 2005/131826 A1 describes a system and method for authorizing certain aspects of network based transactions between a customer and a merchant. At a credit card authorization system, merchant information, transaction information, and a credit card number of a customer is received from an e-commerce merchant. An authorization form at the credit card authorization system that contains the transaction information is created. An internet browser associated with the customer is caused to display the authorization form. A signature phrase is received from the customer via the authorization form. The received signature phrase is verified that it corresponds to a signature phrase stored in a credit card account associated with the credit card number. The internet browser associated with the customer is caused to be transferred to a web site associated with the e-commerce merchant.

GB 2473485 A describes an electronic receipt server which, upon receiving receipt data associated with a customer purchase transaction from a first entity 601, generates a reference associated with the customer purchase transaction 602, stores the receipt data in the data store in association with the reference 603 and returns the reference to the first entity 604. On receipt of a request including the reference from a second entity 605, the server sends an electronic receipt to the second entity 608, the electronic receipt being associated with the reference, and presents the customer purchase transaction according to the receipt data. A point of sale system sends receipt data to a first entity (e.g. receipt server) and receives a corresponding reference back. The POS system then embeds the reference in a message associated with the transaction to a second entity (e.g. acquiring server). Image watermarking may be used for the receipt and the reference may be generated as a hash of the card number or a timestamp.

US 2006/149671 A1 describes a payment processing system that includes one transaction processor that aggregates cost data associated with low-priced sales transactions between a consumer and a merchant. The transaction processor sends data that represents the aggregated cost data to an acquiring banking entity associated with the merchant. The system also includes another transaction processor that stores data that represents each individual low-priced sales transaction. The stored data is accessible by one or more banking entities associated with the merchant.

US 7657740 B2 describes an apparatus for verifying the authority of an owner, in terms of an identifier of a product, the first verification information for verifying the authority held at a terminal for an owner with the authority involving the product, and the second verification information for verifying the authority concerning the identifier of the product stored in a product database. The apparatus comprises means for receiving the identifier and the first verification information, means for acquiring the second verification information from the product DB, and means for determining whether or not there is the authority from the first verification information and the second verification information. A hash value acquired from a one-way hash function is employed as a verification key of the verification information.

WO 01/99063 A1 describes an authentication and/or tracking system for identifying, tracking, authenticating and/or otherwise checking the legitimacy of one or more items which include a coded identity tag or mark. The system comprises identification means for reading said coded identity tag or mark and identifying said one or more items, storage means for storing information relating to the location, whether actual or intended, origin and/or ownership of said one or more items, and means for displaying or otherwise providing or verifying said information relating to an item when its identity tag or mark has been read.

In US 8688524 B1, customers receive advertisements or "impressions" related to brick and mortar merchants while accessing online content. The merchants or other entities track which impressions correlate with customers coming to a physical store and conducting a transaction (e.g., making a purchase) by comparing transaction information with information about the customer that is provided by the source of online impressions. In one implementation, the merchant creates a hash from the customer's name and account number on a payment card. This hash is compared with a hash from the impression provider that is generated using the same technique. When a match is found, it is inferred that exposure to the online impression caused the customer to make a purchase at the physical store. Merchants may pay the impression providers an advertising or referral fee based on the matches.

WO 2017/195160 A1 describes a computer-implemented method and system for verifying the integrity of a computer software for installation using a distributed hash table and a peer-to-peer distributed ledger. This may be the Bitcoin blockchain or an alternative implementation. The method includes determining a metadata associated with a transaction record stored on the peer-to-peer distributed ledger. An indication of an entry stored on the distributed hash table may be determined from the metadata. The method further includes determining a third hash value based on the computer software and determining a fourth hash value from the entry on the distributed hash table. The method further includes comparing the third hash value and the fourth hash value and verifying the integrity of the computer software based on the comparing of the third hash value and the fourth hash value.

### SUMMARY

According to a first aspect, there is provided a computer-implemented verifiable data storage method as set out in claim 1.

The account identifier could comprise a primary account number (PAN) or a tokenised PAN.

Causing the hash to be written to the secure distributed data store can comprise transmitting a message comprising the hash to a node of a network which maintains the secure distributed data store.

The method can further comprise receiving ancillary data, wherein: the hash is produced by operating on the product serial number, the account identifier and the ancillary data; or the method further comprises causing the ancillary data to be written to the data store such that it is linked to the hash, optionally such that the ancillary data is passcode protected with the hash as the passcode.

The ancillary data could comprise one or more of a merchant identifier, merchant location, item price, receipt identifier, offer identifier, date, manufacturer identifier, consumer identifier, product serial number and account identifier.

Causing the hash to be written to the secure distributed data store can comprise selecting the secure distributed data store from a plurality of secure distributed data stores depending on the product serial number and/or received ancillary data.

According to a second aspect, there is provided a method for the verification of a presented product and a presented payment instrument as set out in claim 4.

Providing the confirmation or denial may be performed by a user output device.

The user output device could comprise one or more of a screen, indicator light, speaker, buzzer, haptic feedback device and printer (such as a thermal receipt printer comprised in an electronic point of sale, ePOS).

When a confirmation is provided, providing the confirmation can comprise providing ancillary data which has been stored in the secure distributed data store such that it is linked to the hash, optionally such that the ancillary data is passcode protected with the hash as the passcode.

Searching the secure distributed data store can comprise selecting the secure distributed data store from a plurality of secure distributed data stores depending on the product serial number and/or received ancillary data.

The method can further comprise: searching a further secure data store for a record comprising the account identifier and an additional account identifier; and in response to finding such a record: producing an additional non-invertible hash by operating on the product serial number and the additional account identifier; and searching the secure distributed data store for the additional hash; wherein providing a confirmation or denial of the hash's presence in the secure distributed data store is dependent on a result of the searching for both the hash and the additional hash.

The product serial number is globally unique.

The product serial number is received from an input device; and the account identifier is received from an electronic point of sale, 'POS' terminal.

The input device could comprise one or more of a barcode scanner, a quick response (QR) code scanner, a radio-frequency identification (RFID) reader, a near-field communication (NFC) reader, a physical or virtual keyboard or keypad or a microphone.

The secure distributed data store can be a distributed ledger, optionally a blockchain, or a distributed database exposing verifiable claims.

According to a third aspect, there is provided a computer program product comprising computer-readable instructions which, when executed by one or more processors, cause the method of any of the first to second aspects to be performed.

According to a fourth aspect, there is provided a computer system configured to perform the method of any of the first to second aspects.

### BRIEF DESCRIPTION OF THE FIGURES

Aspects of the present disclosure will now be described by way of example with reference to the accompanying figures. In the figures:
Figure 1 schematically illustrates an example system in which the methods described herein can be used;
Figure 2 illustrates an example computing system;
Figure 3 illustrates an example server; and
Figures 4a and 4b illustrate example methods.

### DETAILED DESCRIPTION OF THE FIGURES

The following description is presented to enable any person skilled in the art to make and use the system, and is provided in the context of a particular application. Various modifications to the disclosed embodiments will be readily apparent to those skilled in the art. The scope of the invention is set out in the appended claims; all embodiments introduced in this description that do not fall under the scope of these claims are to be considered as unclaimed examples.

In order to track products, they are each issued with a product serial number. This may for example be present on a label on the product, e.g. in the form of a barcode or quick response (QR) code. When a product is purchased using an electronic payment method such as a credit or debit card payment or a payment-enabled device payment, an account identifier must be provided, for example a primary account number (PAN) or a tokenised PAN. It is proposed herein that the product serial number and account identifier are linked together by means of a non-invertible hashing algorithm, so that a fixed length record of the purchase is made from which neither the product serial number nor the account identifier can be obtained. The hash is then written to a distributed data store, such as a blockchain, so that it can be accessed by nodes of the distributed data store network. In this way, proof of purchase is tied to a payment instrument. It is then possible to verify that a purchase has been made by presenting the product and card or device used to make the payment, hashing the product and account identifiers according to the same algorithm as before, and searching the distributed data store for the resulting hash.

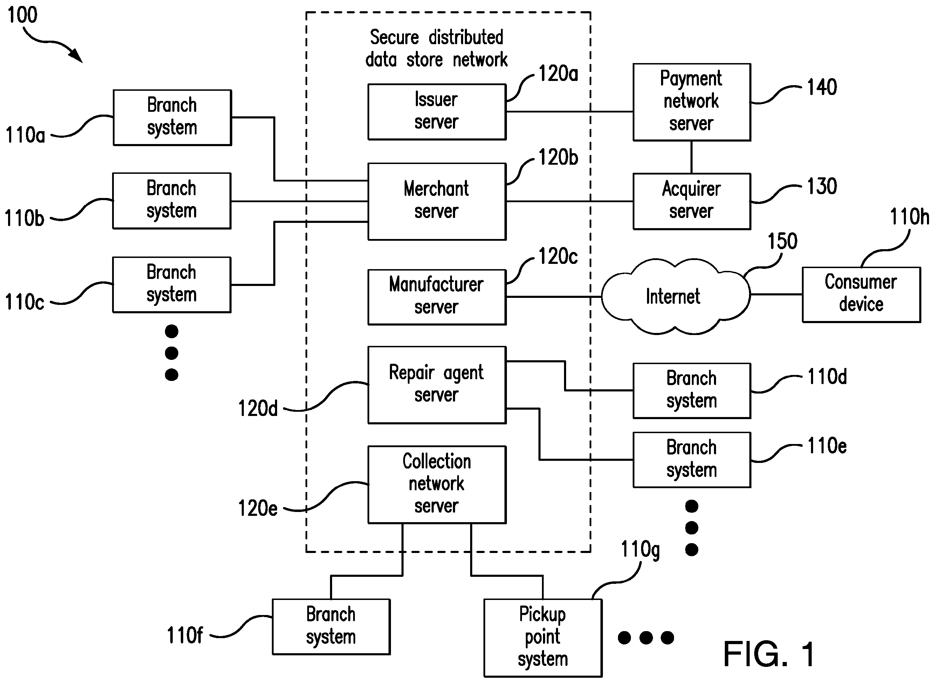

Figure 1 illustrates an example system 100 in which this method can be used. A product is purchased by providing a product serial number and an account identifier to a computing system 110a of a merchant branch. A transaction request comprising these identifiers is transmitted to the main merchant server 120b for routing to the server 120a of the account issuer bank, via a server 130 of the merchant's acquirer bank and a server 140 of a payment network with which both the issuer and the acquirer are enrolled. The issuer server 120a approves the transaction request and passes a transaction approval back to the branch system 110a via the payment network server 140, acquirer server 130 and merchant server 120b so that the consumer can take the product out of the branch.

In addition to these usual transaction request and approval message flows, a hash of the product and account identifiers is performed and the resulting hash is written to a secure distributed data store by one of the nodes 120 of a secure distributed data store network. The secure distributed data store network could for example have nodes at the issuer server 120a, merchant server 120b, a manufacturer server 120c, a repair agent server 120d and a collection network server 120e. For example, the hashing could be performed by one of the branch system 110a and the merchant server 120b and the hash could be written to the secure distributed data store by the merchant server 120b. (The arrangement shown in Figure 1 is exemplary only; which entities are nodes of the secure distributed data store network could be different in other examples, for example the payment network server and/or a server of a regulatory or police authority could be additional nodes.)

If the consumer wishes to return the product, they can then go to any of the merchant's branches and provide the relevant branch system 110a, 110b, 110c etc. with the product and account identifiers in the same way that they did during the initial purchase in order to request verification that the product was purchased using the account identified by the account identifier. Hashing of the product and account identifiers is performed according to the same algorithm as the one used at the time of purchase and then one of the secure distributed data store network nodes 120, for example the merchant server 120b, searches the secure distributed data store for the resulting hash. Depending on the result of the search, an approval or declination of the verification request is issued to the branch system 110.

Similarly, should the consumer wish to have the product repaired by an approved repair agent, the repair agent can confirm that the product is not stolen by issuing a verification request from a repair agent branch system 110d, 110e etc. to the repair agent server 120d to check the secure distributed data store.

If the purchase was performed remotely, for example over the phone or internet, and the product needs to be sent out to the consumer, they could collect it through a collection network, for example comprising pickup concessions in convenience store branches and pickup point lockers at rail and petrol stations. They can provide their account identifier and a product serial number received in a purchase confirmation to a branch system 110f or a pickup point system 110g etc. so that a collection network server 120e, which is a node of the secure distributed data network, can perform a hash check as described above. Alternatively, provided a sufficiently high level of security is in place on the data store, the initial storage of the hash could comprise storing both the hash and the account identifier in a linked manner. In that case only the account identifier needs to be provided in order to collect the product. The product could be marked with the hash so that staff at a pickup concession can identify which product to hand over to which consumer.

If the consumer wishes to register a warranty for the product, they can use a user device 110h to access the manufacturer's website via the internet 150. Warrantee registration can then be approved if a hash check is successful.

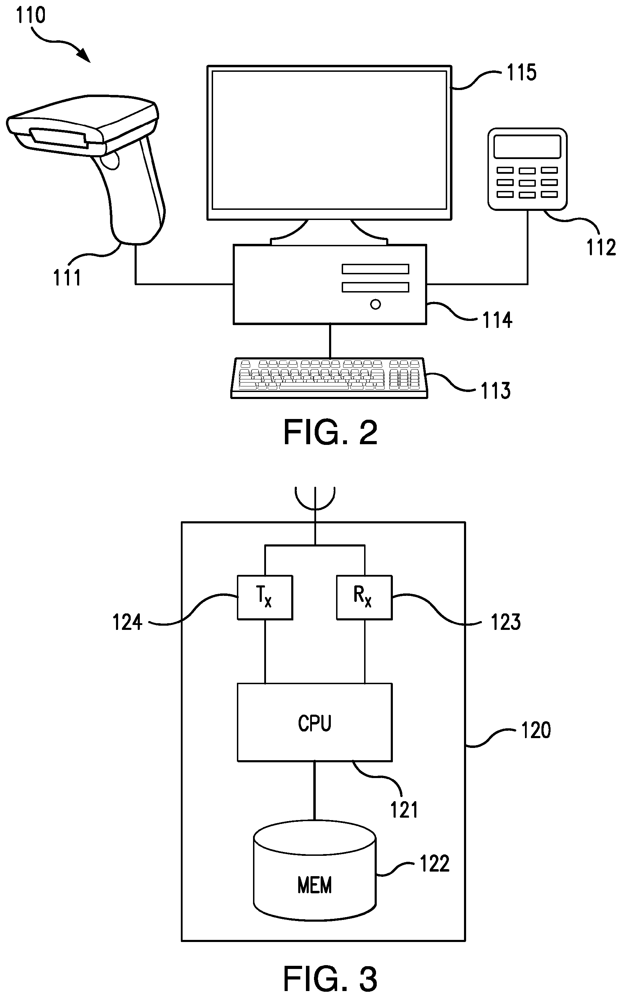

Figure 2 illustrates a computer system 110 such as the merchant, repair service agent or collection network branch systems, the pickup point system or the consumer device shown in Figure 1. It comprises one or more input devices such as a barcode scanner 111, an electronic point of sale (ePOS) terminal 112 and a keyboard 113, which all communicate with a processor unit 114. The processor unit 114 in turn communicates with one or more user output devices such as a monitor 115. The barcode scanner 111 can be used to obtain product serial numbers. The ePOS 112 can be used to obtain account identifiers, for example via near field communication (NFC) with a payment card or payment-enabled device such as a smartphone or smartwatch. The monitor 115 can be used to display approval or decline responses of verification requests.

Figure 3 illustrates a secure distributed data store network node 120 such as the issuer server 120a, merchant server, 120b, manufacturer server 120c, repair agent server 120d or collection network server 120e of Figure 1. It comprises a processor 121 in communication with a memory 122, a receiver 123 and a transmitter 124.

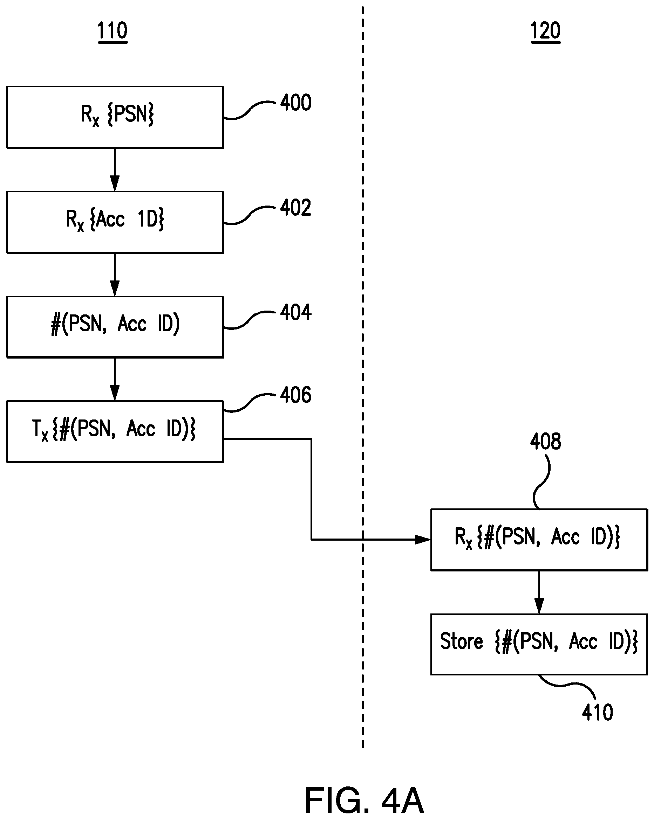

Figure 4A is a flowchart showing an example method for storing product tracking data. At a computing system 110 such as that shown in Figure 2, a product serial number is received at step 400 and an account identifier is received at step 402. Steps 400 and 402 could occur in either order or simultaneously. Next, at step 404 the product serial number and account identifier are hashed and then at step 406 the hash is transmitted to a node 120 of the secure distributed data store network. (Alternatively, the product serial number and account identifier could be transmitted to the node 120 for hashing, or the computing system 110 could itself also be a node 120 of the secure distributed data store network.) At step 408 the hash is received by the node 120, which then writes it to the secure distributed data store at step 410.

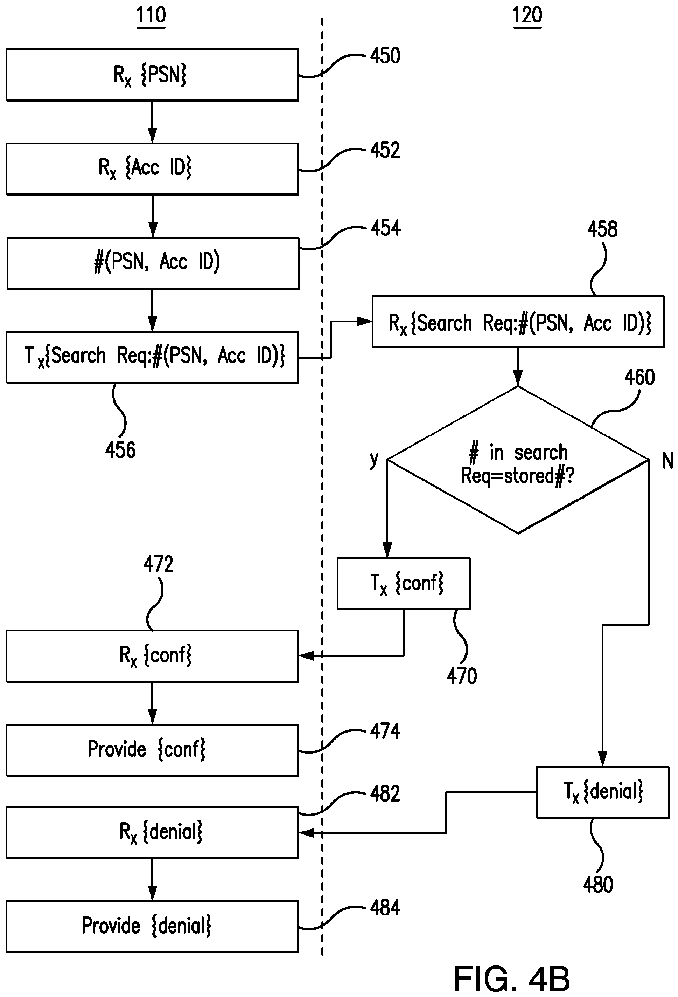

Figure 4B is a flowchart showing an example method for verifying product tracking data, which can be performed at a time later than the method of Figure 4A. At step 450 a computing system 110 (which may be the same computing system 110 as that of Figure 4A, or a different one) receives a product serial number. At step 452 it receives an account identifier. Again, these steps could be performed in either order or simultaneously. The product serial number and account identifier are hashed at step 454 and the hash is transmitted to a node 120 of the secure distributed data store network (which could be the same node 120 as that of Figure 4A, or a different one) in a verification request at step 456. (Alternatively, the product serial number and account identifier could be transmitted to the node 120 for hashing, or the computing system 110 could itself also be a node 120 of the secure distributed data store network.) At step 458 the verification request is received by the node 120, which searches the secure distributed data store for the received hash at step 460. If the received hash matches a stored hash then at step 470 the node 120 transmits a confirmation to the computing system 110. This is received at step 472 and a confirmation notification is provided to a user of the computing system 110 at step 474. If the received hash does not match any stored hash then at step 480 the node 120 transmits a denial to the computing system 110. This is received at step 482 and a denial notification is provided to a user of the computing system 110 at step 474.

The methods and systems described above could be extended to accommodate storage of ancillary data associated with a purchase such as merchant identifier, merchant location, item price, receipt identifier, offer identifier (if any promotional offer is applied), date of purchase, manufacturer identifier and consumer identifier. In some example use cases, such as the remote ordering collection scenario described above, such ancillary data could comprise the account identifier and/or the product serial number. Storage of appropriate ancillary data could also enable additional functionality such as warranty transfer when a product is re-sold.

The hashing could comprise operating on ancillary data as well as the product serial number and account identifier. Alternatively or additionally, ancillary data could be written to the distributed data store such that it is linked to the hash. In that case, the hash could act as a passcode for accessing the ancillary data, allowing the ancillary data to be stored securely in the distributed data store. This can be particularly useful where the distributed data store is accessible to some parties who can be permitted access to ancillary data such as purchase price, and some parties who should not. Alternatively or additionally, ancillary data could be stored in a separate data store.

There could be multiple secure distributed data stores available to write hashes to. For example there could be one per product manufacturer. Which data store to write the hashes to could then be determined for example by a manufacturer prefix in the product serial number, or by some ancillary data obtained together with the product serial number and account identifier. Which data store to search can be determined in the same way.

In order to ensure consumers do not encounter problems with the methods described above when changing accounts, or when their account identifier is updated (for example due to a payment card being lost, stolen or expiring), a further secure data store can be provided to map old and new account identifiers to one another. For example such a secure data store could be held and maintained by a server of an issuing bank of the new account identifier. If such an issuer server is a node of the secure distributed data store network then verification requests can be routed through to the issuer server, comprising the product serial number and the new account identifier, so that the issuer server can look up any old account identifiers linked to the new one and search the secure distributed data store for hashes of the product serial number with each of the linked account identifiers. Alternatively, account identifier mappings could be written to the secure distributed data store and all nodes could have access to it, provided they do so in a secure manner, for example by calling a representational state transfer (REST) application programming interface (API).

The product serial number could be globally unique to allow for tracking of individual items within a manufacturer batch. This can be particularly useful for tracking of regulated products such as pharmaceuticals and weapons. For example, if the product serial number is stored as ancillary data to the hash, then when a pharmaceutical product is to be sold the secure distributed data store can be searched for its product serial number to ensure it has not already been sold, thus preventing accidental resale of returned unused pharmaceuticals which should have been destroyed. This system could also allow police or regulatory authorities to obtain a purchase history of seized black market goods, in order to identify how, when and by whom a product was first put onto the black market. Ownership could be tracked using ancillary data such as account and/or consumer identifiers.

The secure distributed data store can be a distributed ledger such as a blockchain, or a distributed database exposing verifiable claims. Some or all of the data stored could be stored with permissioned access restrictions such that only entities with the appropriate permissions can obtain the data.

The hashing algorithm used could for example be SHA-256, which would uniformly distribute the hashes across a 256 bit key space.

The secure distributed data store could be searched using a Cuckoo or Bloom Filter, to confirm when the hash is definitely not present. If this results in a determination that it could be present, a b-tree index could be used to provide a final determination.

Other embodiments will be apparent to those skilled in the art from consideration of the specification and practice of the embodiments disclosed herein. It is intended that the specification and examples be considered as exemplary only.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, contemporaneously with, or after another operation is in accordance with the described embodiments.

The methods described herein may be encoded as executable instructions embodied in a computer readable medium, including, without limitation, non-transitory computer-readable storage, a storage device, and/or a memory device. Such instructions, when executed by a processor (or one or more computers, processors, and/or other devices) cause the processor (the one or more computers, processors, and/or other devices) to perform at least a portion of the methods described herein. A non-transitory computer-readable storage medium includes, but is not limited to, volatile memory, non-volatile memory, magnetic and optical storage devices such as disk drives, magnetic tape, compact discs (CDs), digital versatile discs (DVDs), or other media that are capable of storing code and/or data.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

User devices can include, without limitation, static user devices such as PCs and mobile user devices such as smartphones, tablets, laptops and smartwatches.

Receivers and transmitters as described herein may be standalone or may be comprised in transceivers. A communication link as described herein comprises at least one transmitter capable of transmitting data to at least one receiver over one or more wired or wireless communication channels. Such a communication link can optionally further comprise one or more relaying transceivers.

User input devices can include, without limitation, microphones, buttons, keypads, touchscreens, touchpads, trackballs, joysticks and mice. User output devices can include, without limitation, speakers, graphical user interfaces, indicator lights and refreshable braille displays. User interface devices can comprise one or more user input devices, one or more user output devices, or both.

## Claims

1. A computer-implemented verifiable data storage method for tracking a product purchasable at a merchant branch, the method comprising:
receiving (401), at a first computing system (110) of the merchant branch and from an input device (111) of the first computing system (110), a product serial number of the product to be purchased, wherein the product serial number is globally unique enabling tracking of the product; receiving (402), at the first computing system (110) and from an electronic point-of-sale, POS, device (112) of the first computing system (110), an account identifier for purchasing the product, the electronic POS device (112) used to obtain the account identifier from a payment instrument and wherein an electronic payment transaction request including the product serial number and the account identifier is transmitted to a merchant server (120b);
generating (404), by one of the first computing system (110) and the merchant server (120b) when the electronic payment transaction request is approved, a hash by hashing the product serial number and the account identifier according to a non-invertible hashing algorithm; and
writing (410), by the merchant server (120b), the hash to a secure distributed data store, wherein the merchant server (120b) is one of a plurality of nodes of a secure distributed data store network associated with the secure distributed data store,
wherein the secure distributed data store is accessible by the plurality of nodes of the secure distributed data store network for verifying that the purchase has been made, wherein the product and the payment instrument used to make the payment are presented, wherein the product serial number of the presented product and the account identifier of the presented payment instrument are hashed according to the same non-invertible hashing algorithm for a resulting hash, and wherein the secure distributed data store is searched for the resulting hash.

2. The method of claim 1, further comprising receiving ancillary data, wherein:
the hash is generated by operating on the product serial number, the account identifier and the ancillary data; or
the method further comprises causing the ancillary data to be written to the secure distributed data store such that it is linked to the hash, optionally such that the ancillary data is passcode protected with the hash as the passcode.

3. The method of either of claims 1 or 2, wherein causing the hash to be written to the secure distributed data store comprises selecting the secure distributed data store from a plurality of secure distributed data stores depending on the product serial number and/or received ancillary data.

4. The method of claim 1, further comprising, at a later time,
receiving (450), at a second computing system (110) of the merchant branch and from an input device (111) of the second computing system (110), a product serial number of a presented product;
receiving (452), at the second computing system (110) and from an electronic point-of-sale, POS, device (112) of the second computing system (110), an account identifier of a presented payment instrument, wherein the electronic POS device (112) of the second computing system (110) is used to obtain the account identifier from the presented payment instrument and wherein the account identifier of the presented payment instrument comprises a primary account number (PAN) or a tokenized PAN;
generating (454), by one of the second computing system (110) and a node (120), a hash by hashing the product serial number of the presented product and the account identifier of the presented payment instrument according to the non-invertible hashing algorithm wherein the node (120) is one of the plurality of nodes;
searching (460), by the node (120), the secure distributed data store for the generated hash; and
depending (474, 484) on a result of the searching, providing, by the second computing system (110), a confirmation or denial of the generated hash's presence in the secure distributed data store,
wherein the second computing system (110) is the first computing system (110) or a different computing system (110) than the first computing system (110).

5. The method of either of claim 4, wherein, when a confirmation is provided, providing the confirmation comprises providing ancillary data which has been stored in the secure distributed data store such that it is linked to the generated hash, optionally such that the ancillary data is passcode protected with the generated hash as the passcode.

6. The method of any of claims 4 to 5, wherein searching the secure distributed data store comprises selecting the secure distributed data store from a plurality of secure distributed data stores depending on the product serial number and/or received ancillary data.

7. The method of any of claims 4 to 6, further comprising:
searching a further secure data store for a record comprising the account identifier and an additional account identifier; and
in response to finding such a record:
producing an additional non-invertible hash by operating on the product serial number and the additional account identifier; and
searching the secure distributed data store for the additional hash;
wherein providing a confirmation or denial of the hash's presence in the secure distributed data store is dependent on a result of the searching for both the hash and the additional hash.

8. The method of any preceding claim, wherein the secure distributed data store is a distributed ledger, optionally a blockchain, or a distributed database exposing verifiable claims.

9. A computer program product comprising computer-readable instructions which, when executed by one or more processors, cause the method of any preceding claim to be performed.

10. A computer system (100) configured to perform the method of any of claims 1 to 8.

## Patentansprüche

1. Computerimplementiertes verifizierbares Datenspeicherverfahren zum Verfolgen eines Produkts, das in einer Händlerfiliale erwerbbar ist, das Verfahren umfassend:
Empfangen (401) einer Produktseriennummer des zu erwerbenden Produkts an einem ersten Rechensystem (110) der Händlerfiliale und von einer Eingabevorrichtung (111) des ersten Rechensystems (110),
wobei die Produktseriennummer global eindeutig ist, sodass sie eine Verfolgung des Produkts ermöglicht; Empfangen (402) eines Kontoidentifikators zum Erwerben des Produkts an dem ersten Rechensystem (110) und von einer elektronischen Verkaufspunkt-, POS-, Vorrichtung (112) des ersten Rechensystems (110), wobei die elektronische POS-Vorrichtung (112) dazu verwendet wird, den Kontoidentifikator von einem Zahlungsinstrument zu erhalten, und
wobei eine elektronische Zahlungstransaktionsanforderung, die die Produktseriennummer und den Kontoidentifikator einschließt, an einen Händlerserver (120b) übertragen wird;
Erzeugen (404) eines Hashs durch eines von dem ersten Rechensystem (110) und dem Händlerserver (120b), wenn die elektronische Zahlungstransaktionsanforderung genehmigt wird, durch Hashen der Produktseriennummer und des Kontoidentifikators nach einem nicht-invertierbaren Hash-Algorithmus; und Schreiben (410) des Hashs durch den Händlerserver (120b) in einen sicheren verteilten Datenspeicher,
wobei der Händlerserver (120b) einer von einer Vielzahl von Knoten eines sicheren verteilten Datenspeichernetzwerks ist, das dem sicheren verteilten Datenspeicher zugeordnet ist,
wobei auf den sicheren verteilten Datenspeicher durch die Vielzahl von Knoten des sicheren verteilten Datenspeichernetzwerks zum Verifizieren, dass der Erwerb erfolgt ist, zugreifbar ist,
wobei das Produkt und das Zahlungsinstrument, das verwendet wurde, um die Zahlung vorzunehmen, vorgelegt werden, wobei die Produktseriennummer des vorgelegten Produkts und der Kontoidentifikator des vorgelegten Zahlungsinstruments nach demselben nicht-invertierbaren Hash-Algorithmus zu einem resultierenden Hash gehasht werden und wobei der sichere verteilte Datenspeicher nach dem resultierenden Hash durchsucht wird.

2. Verfahren nach Anspruch 1, weiter umfassend Empfangen von Zusatzdaten, wobei:
der Hash durch Operieren auf der Produktseriennummer, dem Kontoidentifikator und den Zusatzdaten erzeugt wird; oder
das Verfahren weiter Veranlassen, dass die Zusatzdaten derart in den sicheren verteilten Datenspeicher geschrieben werden, dass sie mit dem Hash verknüpft sind, optional derart, dass die Zusatzdaten passcodegeschützt sind, mit dem Hash als der Passcode, umfasst.

3. Verfahren nach Anspruch 1 oder 2, wobei das Veranlassen, dass der Hash in den sicheren verteilten Datenspeicher geschrieben wird, Auswählen des sicheren verteilten Datenspeichers aus einer Vielzahl von sicheren verteilten Datenspeichern in Abhängigkeit von der Produktseriennummer und/oder empfangenen Zusatzdaten umfasst.

4. Verfahren nach Anspruch 1, weiter umfassend, zu einem späteren Zeitpunkt,
Empfangen (450) einer Produktseriennummer eines vorgelegten Produkts an einem zweiten Rechensystem (110) der Händlerfiliale und von einer Eingabevorrichtung (111) des zweiten Rechensystems (110);
Empfangen (452) eines Kontoidentifikators eines vorgelegten Zahlungsinstruments an dem zweiten Rechensystem (110) und von einer elektronischen Verkaufspunkt-, POS-, Vorrichtung (112) des zweiten Rechensystems (110),
wobei die elektronische POS-Vorrichtung (112) des zweiten Rechensystems (110) dazu verwendet wird, den Kontoidentifikator aus dem vorgelegten Zahlungsinstrument zu erhalten, und wobei der Kontoidentifikator des vorgelegten Zahlungsinstruments eine primäre Kontonummer (PAN) oder eine tokenisierte PAN umfasst;
Erzeugen (454), durch eines von dem zweiten Rechensystem (110) und einem Knoten (120),
eines Hashs durch Hashen der Produktseriennummer
des vorgelegten Produkts und des Kontoidentifikators des vorgelegten Zahlungsinstruments nach dem nicht-invertierbaren Hash-Algorithmus, wobei der Knoten (120) einer der Vielzahl von Knoten ist;
Durchsuchen (460) des sicheren verteilten Datenspeichers nach dem erzeugten Hash durch den Knoten (120); und
in Abhängigkeit (474, 484) von einem Ergebnis des Durchsuchens, Bereitstellen, durch das zweite Rechensystem (110),
einer Bestätigung oder Verneinung des Vorhandenseins des erzeugten Hash-Werts in dem sicheren verteilten Datenspeicher,
wobei das zweite Rechensystem (110) das erste Rechensystem (110) oder ein anderes Rechensystem (110) als das erste Rechensystem (110) ist.

5. Verfahren nach einem von Anspruch 4, wobei, wenn eine Bestätigung bereitgestellt wird, das Bereitstellen der Bestätigung Bereitstellen von Zusatzdaten umfasst, die in dem sicheren verteilten Datenspeicher derart gespeichert wurden, dass sie mit dem erzeugten Hash verknüpft sind, optional derart, dass die Zusatzdaten passcodegeschützt sind, mit dem erzeugten Hash als der Passcode.

6. Verfahren nach einem der Ansprüche 4 bis 5, wobei das Durchsuchen des sicheren verteilten Datenspeichers Auswählen des sicheren verteilten Datenspeichers aus einer Vielzahl von sicheren verteilten Datenspeichern in Abhängigkeit von der Produktseriennummer und/oder empfangenen Zusatzdaten umfasst.

7. Verfahren nach einem der Ansprüche 4 bis 6, weiter umfassend:
Durchsuchen eines weiteren sicheren Datenspeichers nach einer Aufzeichnung, die den Kontoidentifikator und einen zusätzlichen Kontoidentifikator umfasst; und
als Reaktion auf das Auffinden einer derartigen Aufzeichnung:
Produzieren eines zusätzlichen, nicht-invertierbaren Hashs durch Operieren auf der Produktseriennummer und dem zusätzlichen Kontoidentifikator; und
Durchsuchen des sicheren verteilten Datenspeichers nach dem zusätzlichen Hash; wobei das Bereitstellen einer Bestätigung oder Verneinung des Vorhandenseins des Hashs in dem sicheren verteilten Datenspeicher von einem Ergebnis des Suchens sowohl nach dem Hash als auch nach dem zusätzlichen Hash abhängig ist.

8. Verfahren nach einem vorstehenden Anspruch, wobei der sichere verteilte Datenspeicher ein verteiltes Hauptbuch, optional eine Blockchain, oder eine verteilte Datenbank ist, das bzw. die verifizierbare Behauptungen enthüllt.

9. Computerprogrammprodukt, das computerlesbare Anweisungen umfasst, die bei Ausführung durch einen oder mehrere Prozessoren veranlassen, dass das Verfahren nach einem der vorstehenden Ansprüche durchgeführt wird.

10. Computersystem (100), das dazu ausgebildet ist, das Verfahren nach einem der Ansprüche 1 bis 8 durchzuführen.

## Revendications

1. Procédé de stockage de données vérifiables mis en œuvre par ordinateur pour suivre un produit pouvant être acheté à une succursale de commerçant, le procédé comprenant :
la réception (401), au niveau d'un premier système informatique (110) de la succursale de commerçant et en provenance d'un dispositif d'entrée (111) du premier système informatique (110), d'un numéro de série de produit du produit à acheter,
dans lequel le numéro de série de produit est globalement unique, permettant le suivi du produit, la réception (402), au niveau du premier système informatique (110) et en provenance d'un dispositif électronique de point de vente POS (112) du premier système informatique (110), d'un identificateur de compte pour acheter le produit, le dispositif électronique de point de vente POS (112) étant utilisé pour obtenir l'identificateur de compte à partir d'un instrument de paiement et
dans lequel une requête de transaction de paiement électronique incluant le numéro de série de produit et l'identificateur de compte est transmise à un serveur (120b) de commerçant ;
la génération (404), par l'un du premier système informatique (110) et du serveur (120b) de commerçant lorsque la requête de transaction de paiement électronique est approuvée, d'un hachage par hachage du numéro de série de produit et de l'identificateur de compte selon un algorithme de hachage non inversible ; et l'écriture (410), par le serveur (120b) de commerçant, du hachage dans un magasin de données distribué sécurisé,
dans lequel le serveur (120b) de commerçant est l'un d'une pluralité de nœuds d'un réseau de magasins de données distribués sécurisés associé au magasin de données distribué sécurisé,
dans lequel le magasin de données distribué sécurisé est accessible par la pluralité de nœuds du réseau de magasins de données distribués sécurisés pour vérifier que l'achat a été effectué,
dans lequel le produit et l'instrument de paiement utilisé pour effectuer le paiement sont présentés, dans lequel le numéro de série de produit du produit présenté et l'identificateur de compte de l'instrument de paiement présenté sont hachés selon le même algorithme de hachage non inversible pour un hachage résultant, et dans lequel une recherche du hachage résultant est effectuée dans le magasin de données distribué sécurisé.

2. Procédé selon la revendication 1, comprenant en outre la réception de données auxiliaires, dans lequel :
le hachage est généré en agissant sur le numéro de série de produit, l'identificateur de compte et les données auxiliaires ; ou
le procédé comprend en outre le fait de provoquer l'écriture des données auxiliaires dans le magasin de données distribué sécurisé de sorte qu'elles soient liées au hachage, facultativement de sorte que les données auxiliaires soient protégées par code d'accès avec le hachage comme code d'accès.

3. Procédé selon la revendication 1 ou la revendication 2, dans lequel le fait de provoquer l'écriture du hachage dans le magasin de données distribué sécurisé comprend la sélection du magasin de données distribué sécurisé parmi une pluralité de magasins de données distribués sécurisés en fonction du numéro de série de produit et/ou des données auxiliaires reçues.

4. Procédé selon la revendication 1, comprenant en outre, à un moment ultérieur,
la réception (450), au niveau d'un deuxième système informatique (110) de la succursale de commerçant et en provenance d'un dispositif d'entrée (111) du deuxième système informatique (110), d'un numéro de série de produit d'un produit présenté ;
la réception (452), au niveau du deuxième système informatique (110) et en provenance d'un dispositif électronique de point de vente POS (112) du deuxième système informatique (110), d'un identificateur de compte d'un instrument de paiement présenté,
dans lequel le dispositif électronique de point de vente POS (112) du deuxième système informatique (110) est utilisé pour obtenir l'identificateur de compte à partir de l'instrument de paiement présenté et dans lequel l'identificateur de compte de l'instrument de paiement présenté comprend un numéro de compte primaire (PAN) ou un PAN tokenisé ;
la génération (454), par l'un du deuxième système informatique (110) et d'un nœud (120), d'un hachage par hachage du numéro de série de produit du produit présenté et de l'identificateur de compte de l'instrument de paiement présenté selon l'algorithme de hachage non inversible, dans lequel le nœud (120) est l'un de la pluralité de nœuds ;
la recherche (460), par le nœud (120), dans le magasin de données distribué sécurisé, du hachage généré ; et
en fonction (474, 484) d'un résultat de la recherche, la fourniture, par le deuxième système informatique (110),
d'une confirmation ou infirmation de la présence du hachage généré dans le magasin de données distribué sécurisé,
dans lequel le deuxième système informatique (110) est le premier système informatique (110) ou un système informatique (110) différent du premier système informatique (110).

5. Procédé selon l'une quelconque de la revendication 4, dans lequel, lorsqu'une confirmation est fournie, la fourniture de la confirmation comprend la fourniture de données auxiliaires qui ont été stockées dans le magasin de données distribué sécurisé de sorte qu'elles soient liées au hachage généré, facultativement de sorte que les données auxiliaires soient protégées par code d'accès avec le hachage généré comme code d'accès.

6. Procédé selon l'une quelconque des revendications 4 à 5, dans lequel la recherche dans le magasin de données distribué sécurisé comprend la sélection du magasin de données distribué sécurisé parmi une pluralité de magasins de données distribués sécurisés en fonction du numéro de série de produit et/ou des données auxiliaires reçues.

7. Procédé selon l'une quelconque des revendications 4 à 6, comprenant en outre :
la recherche, dans un magasin de données sécurisé supplémentaire, d'un enregistrement comprenant l'identificateur de compte et d'un identificateur de compte supplémentaire ; et
en réponse à la découverte d'un tel enregistrement :
la production d'un hachage non inversible supplémentaire en agissant sur le numéro de série de produit et l'identificateur de compte supplémentaire ; et
la recherche, dans le magasin de données distribué sécurisé, du hachage supplémentaire ; dans lequel la fourniture d'une confirmation ou infirmation de la présence du hachage dans le magasin de données distribué sécurisé dépend d'un résultat de la recherche à la fois du hachage et du hachage supplémentaire.

8. Procédé selon une quelconque revendication précédente, dans lequel le magasin de données distribué sécurisé est un registre distribué, facultativement une chaîne de blocs, ou une base de données distribuée exposant des revendications vérifiables.

9. Produit programme d'ordinateur comprenant des instructions lisibles par ordinateur qui, lorsqu'elles sont exécutées par un ou plusieurs processeurs, provoquent la réalisation du procédé selon une quelconque revendication précédente.

10. Système informatique (100) configuré pour réaliser le procédé selon l'une quelconque des revendications 1 à 8.
